# EUROPEAN PATENT APPLICATION

(11) **EP 4 611 359 A1**
(43) Date of publication of application: **03.09.2025**
(21) Application number: 23882762.0
(22) Date of filing: 27.10.2023
(51) Int. Cl.: H04N 7/18, B07C 5/34, G01N 21/85

(54) **IDENTIFICATION DEVICE, SELECTION DEVICE, AND IDENTIFICATION METHOD**

(30) Priority: 27.10.2022 JP 2022172161
(71) Applicant: Kabushiki Kaisha Earthtechnica, Tokyo 101-0051 (JP); Toyokin Co., Ltd., Toyota-city, Aichi 471-0836 (JP)
(72) Inventor: TAKANAMI, Hirotoshi, Yachiyo-shi, Chiba 2760022 (JP); KAMINOTA, Shigenori, Yachiyo-shi, Chiba 2760022 (JP); HONGO, Akihiro, Yachiyo-shi, Chiba 2760022 (JP); KOJIMA, Shogo, Akashi-shi, Hyogo 6738666 (JP); ISHIDA, Yusaku, Akashi-shi, Hyogo 6738666 (JP)
(74) Representative: Arnold & Siedsma
(86) International application number: PCT/JP2023/038906
(87) International publication number: WO 2024/090560

(57) **Abstract**

An identification device (2) comprises a conveyer (10), a camera (12), and an image processor. The conveyer (10) has a conveyance surface (10a) for placement of a subject, and conveys the subject. The camera (12) is disposed in a thermostatic environment and captures the subject that is conveyed by the conveyer (10). The image processor analyzes an image obtained by capturing the subject with the camera (12), and identifies the subject on the conveyance surface (10a).

## Description

### TECHNICAL FIELD

The present application mainly relates to an identification device configured to identify an object that is placed on a conveyance surface of a conveyor.

### BACKGROUND ART

PTL 1 discloses an identification device including a belt conveyor, a laser measurement device, and an arithmetic processor. The belt conveyor conveys a crushed piece to be identified. The laser measurement device performs three-dimensional measurement of the crushed piece that is conveyed by the belt conveyor. The processor identifies the crushed piece on the belt conveyor, and determines whether the crushed piece is a steel plate or a component based on a three-dimensional shape of the crushed piece.

### CITATION LIST

### Patent Literature

PTL 1: Japanese Patent No. 6425243

### SUMMARY OF INVENTION

### Technical Problem

As a method for detecting the object on the conveyor, a method using a camera has been known in addition to a method using the laser measurement device. The object on the conveyor is captured with the use of the camera, thereby obtaining an image including the conveyor and the object. Analysis of such an image can identify the object on the conveyor. However, when the camera is used, there are cases where a clear image cannot be obtained due to the object being out of focus. As a result, the accuracy of identification of the object may be reduced.

The present application has been made in light of the circumstances described above, its main object is to provide a configuration of an identification device having high accuracy of identification of an object, the identification device identifying the object using an image obtained from the camera capturing the object.

### Solution to Problem

Problems to be solved by the present invention are as described above, and next, means for solving the problems and effects thereof will be described.

According to a first aspect of the present application, an identification device having the following configuration is provided. That is, the identification device includes a conveyor, a camera, and an image processor. The conveyor has a conveyance surface for placing an object and conveys the object. The camera is placed in a constant-temperature environment and captures the object conveyed by the conveyor. The image processor is configured to analyze an image obtained from the camera capturing the object to identify the object on the conveyance surface.

According to a second aspect of the present application, the following identification method is provided. That is, in the identification method, a conveyor in a state where an object is placed on a conveyance surface of the conveyor is operated to convey the object. In the identification method, the object conveyed by the conveyor is captured with the use of a camera that is placed in a constant-temperature environment. In the identification method, an image obtained from the camera capturing the object is analyzed to identify the object on the conveyance surface.

### Advantageous Effects of Invention

According to the present application, in an identification device configured to identify an object using an image obtained from the camera capturing the object, a configuration having high accuracy of identification of the object can be provided.

### BRIEF DESCRIPTION OF DRAWINGS

FIG. 1 illustrates a configuration of a sorting device.
FIG. 2 is a flowchart of a process of determining whether a crushed piece belongs to a low-content group or a high-content group based on an image.
FIG. 3 is a cross-sectional perspective view illustrating a layout of devices inside a heat-insulating cover.
FIG. 4 is a side cross-sectional view illustrating a layout of the devices inside the heat-insulating cover.
FIG. 5 is a graph illustrating time change of a 10-minute sorting rate and a lens temperature, according to a comparative example.
FIG. 6 is a graph illustrating time change of a 10-minute sorting rate and a lens temperature according to an embodiment.

### DESCRIPTION OF EMBODIMENTS

Next, an embodiment of the present application will be described with reference to drawings.

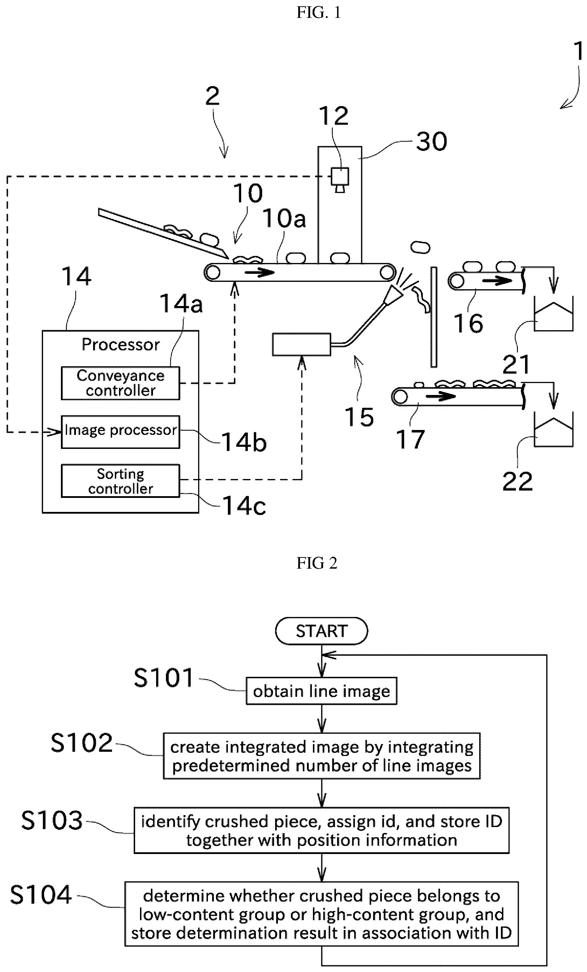

A sorting device 1 illustrated in FIG. 1 is a device configured to sort crushed pieces that are each an object according to a content rate of an additive metal. The crushed pieces are obtained by metals for recycling being processed by a crusher, for example. The crusher is disposed on an upstream side of the sorting device 1, and the crushed pieces are supplied from the crusher to the sorting device 1. The crusher may be disposed in a factory or the like, separate from the sorting device 1. In this case, the crushed pieces generated by the crusher are transported and then supplied to the sorting device 1.

The object is not limited to a metal, but may be a resin material or wood material, for example. In addition, sorting criteria is not limited to a content rate of additives in the object, but may be the weight or shape of the additives in the object, for example. The technical contents described in the present embodiment can also be applied to a device that does not perform sorting. Examples of a device that does not perform sorting include a device that obtains information regarding an object, or a device that analyzes information regarding an object and performs inspections of the object.

As illustrated in FIG. 1, the sorting device 1 includes a conveyor 10, a camera 12, a processor 14, and a sorting portion 15. The sorting device 1 includes an identification device 2 that identifies crushed pieces placed on the conveyor 10. The camera 12 and the processor 14 constitute the identification device 2.

The conveyor 10 conveys the crushed pieces that are supplied from the crusher or the like, to a downstream side. The conveyor 10 of the present embodiment is a belt conveyor, but another conveyor can be used as long as the conveyor can convey the crushed pieces. Said another conveyor is a roller conveyor, for example.

The conveyor 10 has a conveyance surface 10a on which the crushed pieces are placed. The conveyance surface 10a of the present embodiment is a top surface of the belt. In the case where the conveyor 10 is a roller conveyor, a virtual plane connecting the highest positions of rollers serves as the conveyance surface 10a. That is, the conveyance surface 10a can be referred to as a plane on which lower ends of the crushed pieces that have been conveyed pass.

The camera 12 is disposed above the conveyor 10. The camera 12 is a line camera. The camera 12 obtains the conveyance surface 10a and line images of the crushed pieces. The longitudinal direction of the line image is parallel to the width direction of the conveyor 10. In the present specification, terms such as "parallel" and "perpendicular" that express directions include not only exactly parallel and perpendicular states, but also substantially parallel and perpendicular states. The camera 12 is not limited to the line camera. That is, the shape of a capturing range of the camera 12 is not limited to a linear shape, but may be a rectangular or circular shape.

The sorting device 1 sorts the crushed pieces into two levels according to a content rate of an additive metal. Hereinafter, a group of one of the levels having a higher content rate of the additive metal is referred to as a high-content group, and a group of the other of the levels having a lower content rate of the additive metal is referred to as a low-content group. The grouping is not limited to two levels, but may be three or more levels. For example, in the case where the crushed pieces are each steel and contain a large amount of additive metals such as manganese or chromium, it may be undesirable to use such crushed pieces for recycling purposes in cast iron. For example, for steel with a high content of manganese or chromium, graphite may be less likely to deposit during solidification in casting, or a brittle structure called chill may be generated. Thus, the crushed pieces are sorted according to the content rate of the additive metal, thereby allowing steel to be separated into steel suitable for recycling purposes and steel unsuitable for recycling purposes. The composition of the crushed pieces is not limited to steel, but may be other alloys. The other alloys are, for example, iron alloys other than steel or aluminum alloys. The additive metal is not limited to manganese or chromium, but may be nickel, for example.

The processor 14 includes a computing device such as an FPGA, ASIC, or CPU, and a memory device such as an SSD or flash memory. The computing device executes various processes related to the sorting device 1 by reading and executing programs stored in the memory device. Hereinafter, the processor 14 may be separately referred to as a conveyance controller 14a, an image processor 14b, and a sorting controller 14c that are divided according to functions. The conveyance controller 14a controls the conveyor 10. The image processor 14b analyzes images obtained from the camera 12 capturing the object. The sorting controller 14c controls the sorting portion 15.

The sorting portion 15 is an air injector that is capable of switching the crushed pieces conveyed by the conveyor 10, between being delivered to a first collection portion 21 via a first conveyor 16 and being delivered to a second collection portion 22 via a second conveyor 17. The first collection portion 21 is a container that mainly collects the crushed pieces in the low-content group. The second collection portion 22 is a container that mainly collects the crushed pieces in the high-content group. The sorting portion 15 injects compressed air toward the crushed pieces, which can deliver the crushed pieces to the first conveyor 16. In the case where the sorting portion 15 does not inject the compressed air, the crushed pieces fall naturally downward and are delivered to the second conveyor 17. The position and timing at which the sorting portion 15 injects the compressed air are controlled by the sorting controller 14c.

The sorting portion 15 may inject the compressed air toward the crushed pieces in the high-content group to sort the crushed pieces. In addition, the sorting portion 15 is not limited to a machine that injects the compressed air. For example, the sorting portion 15 may be an arm robot. The arm robot picks up the crushed pieces and assigns them to respective locations depending on whether the crushed piece belongs to the high-content group or the low-content group.

Next, processing executed by the processor 14 will be described with reference to FIG. 2.

Each of the crushed pieces conveyed on the conveyor 10 is captured by the camera 12 to obtain a line image. Such a line image is outputted to the processor 14. The image processor 14b obtains this line image (S101). The camera 12 generates line images at predetermined time intervals. Thus, the image processor 14b also obtains the line images sequentially. Alternatively, the camera 12 may obtain only the original data for the line image, and then, the image processor 14b may process such data to generate the line image.

Next, the image processor 14b creates an integrated image by integrating a predetermined number of line images (S102). Specifically, the image processor 14b creates the integrated image by arranging and connecting a plurality of line images in chronological order. In the case where the camera 12 is not the line camera but a camera with a rectangular capturing range, the processing of step S102 can be omitted.

Next, the image processor 14b identifies the crushed pieces by analyzing the integrated image, assigns an ID to each of the crushed pieces, and stores the ID together with position information (S103). The ID of each crushed piece is a unique character string for identifying the crushed piece. The position information of each crushed piece includes its position in the width direction and its position in the conveyance direction.

Next, the image processor 14b determines whether the crushed piece belongs to the low-content group or the high-content group, and stores the determination result in association with the ID (S104). The image processor 14b analyzes the image of the crushed piece to determine whether the crushed piece belongs to the low-content group or the high-content group, which will be described as follows. The additive metal is added in order to improve the strength of iron alloys, and the like. Thus, the crushed piece having a high-content rate of the additive metal has relatively high strength and is less likely to deform at a time of processing by a crusher. Conversely, the crushed piece having a low-content rate has relatively low strength and is likely to deform at a time of processing by the crusher. Specifically, the lower the content rate of the additive metal in the steel plate is, the more likely the steel plate is to be folded into a rounded shape when the steel plate is put into the crusher. As a result, wrinkles are more likely to appear on the surface of the crushed piece. Thus, there is a correlation between a wrinkle ratio and the content rate of the additive metal. The wrinkle ratio is a ratio of the wrinkles on the crushed piece's surface. Specifically, the higher the wrinkle ratio is, the less the content rate of the additive metal is.

The image processor 14b analyzes the image to identify a range where the wrinkles have appeared on the crushed piece. Next, the image processor 14b calculates the wrinkle ratio, which is an area of a part of the crushed piece where the wrinkles have appeared, relative to a total area of the crushed piece. The image processor 14b determines that the crushed piece whose wrinkle ratio exceeds a threshold belongs to the low-content group. The image processor 14b determines that the crushed piece whose wrinkle ratio is equal to or less than the threshold belongs to the high-content group.

The image processor 14b repeats the above processes to process each crushed piece that has been conveyed on the conveyor 10, and to store the ID, the position information, and information on whether each crushed piece belongs to the low-content group or the high-content group. Thereafter, the sorting controller 14c causes the sorting portion 15 to inject the compressed air at a timing when the crushed piece that has been determined to belong to the low-content group passes by the sorting portion 15. As described above, the crushed pieces can be sorted according to the content rate of the additive metal. Using the wrinkle ratio as an indicator of the content rate of the additive metal is merely an example, and another indicator may be used.

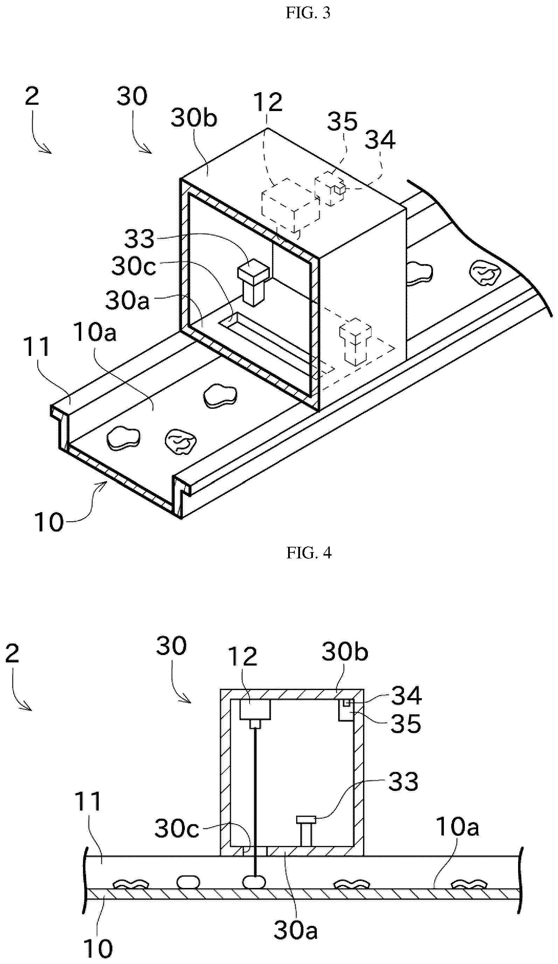

Next, a configuration for obtaining a clear image of the crushed piece will be described with reference to FIGS. 3 and 4.

In the case where the image obtained from the camera 12 capturing the crushed piece is unclear, a boundary between the crushed piece and the conveyance surface 10a cannot be clearly identified. As a result, the position of the crushed piece cannot be accurately obtained in some cases. Furthermore, due to the unclear image, the crushed piece itself may be unidentifiable. In addition, at a time of calculation of the wrinkle ratio, the accuracy of the process of calculating the area of the crushed piece may decrease, and the accuracy of the process of identifying the range where the wrinkles have appeared may decrease. As a result, the accuracy of sorting of the crushed pieces is reduced.

In the present embodiment, since the distance from the camera 12 to the conveyance surface 10a is constant, pre-adjustment of a focal length allows the camera 12 to focus on the crushed piece. As a result, by satisfying other conditions such as brightness and shutter speed, a clear image can be stably obtained. However, in the case where a lens temperature changes, lenses expand or contract, which changes the focal length of each lens. As a result, the camera does not focus on the crushed piece, and thus, there is a possibility that the clear image cannot be obtained.

Taking the above into consideration, in the present embodiment, the camera 12 is located in a constant-temperature environment in order to keep the lens temperature of the camera 12 substantially constant. The constant-temperature environment is an environment where a certain temperature range is kept. The camera 12 is located in the constant-temperature environment, which can keep the focal length of each lens substantially constant. Accordingly, the camera 12 can focus on the crushed piece even when the outside temperature changes over time. This can stably obtain the clear image.

Hereinafter, members for creating the constant-temperature environment will be described. As illustrated in FIGS. 3 and 4, the identification device 2 includes a heat-insulating cover 30. The heat-insulating cover 30 is constituted by a heat-insulating material, and has a heat-insulating space formed therein. The heat-insulating cover 30 of the present embodiment has a cuboid shape, and includes a bottom plate 30a, a top plate 30b, and four side plates. In addition, a window portion 30c for capturing the crushed pieces is formed in the bottom plate 30a. The window portion 30c is a part of the bottom plate 30a that is opened to allow light to pass through. A light-transmission material may be disposed in such an opened part of the bottom plate 30a. The window portion 30c is elongated, and the longitudinal direction of the window portion 30c coincides with the longitudinal direction of the line image of the camera 12. In the present embodiment, the conveyance direction of the conveyor 10 coincides with the longitudinal direction thereof, and a direction perpendicular to the longitudinal direction of the conveyor 10 on the conveyance surface 10a is the width direction of the conveyor 10. On a plane parallel to the bottom plate 30a, a direction perpendicular to the longitudinal direction of the window portion 30c is the width direction of the window portion 30c. Support stands 11 are provided on two widthwise ends of the conveyor 10, and the heat-insulating cover 30 is placed on the support stands 11.

The shape of the heat-insulating cover 30 is merely an example, and may be a cylindrical shape. For example, the bottom plate 30a may be omitted. The camera 12, heaters 33, a temperature sensor 34, and a temperature controller 35 are arranged in the heat-insulating space.

The camera 12 is disposed on the top plate 30b. The lenses of the camera 12 face downward or diagonally downward, and the camera 12 captures the crushed pieces conveyed on the conveyance surface 10a. The light for forming an image of the conveyance surface 10a and the crushed pieces enters through the window portion 30c, and is incident onto an image sensor of the camera 12.

The focus adjustment of the camera 12 is performed in advance at a predetermined temperature. The focus adjustment means that positions of the lenses of the camera 12 change such that positions of the conveyance surface 10a and the crushed piece on the conveyance surface 10a are included in the focus range. An object of the present embodiment is to maintain the heat-insulating space at such a predetermined temperature. Thus, the predetermined temperature is hereinafter referred to as a target temperature.

The heaters 33 are disposed on the bottom plate 30a. Specifically, the heaters 33 are respectively disposed on widthwise outward sides of the window portion 30c. This reduces the size of the heat-insulating cover 30, as compared with a configuration in which the heater 33 is located on a longitudinal outward side of the window portion 30c. In the present embodiment, two heaters 33 are provided. The heaters 33 are disposed at a location that is not within the field of view of the camera 12. However, the number of heaters 33 may be one. The positions of the heaters 33 are not limited to the bottom plate 30a. The heaters 33 may be disposed on the top plate 30b or the side plates.

The heaters 33 heat the heat-insulating space. Specifically, the heaters 33 each have a heating element such as a heating wire. The electric power is supplied to the heaters 33, and the supplied electric power is converted into heat via the heating element. The heaters 33 may be each provided with a fan for dissipating heat. The fan is not an essential component. In the case where the heaters 33 are disposed in the vicinity of the camera 12, the temperature around the camera 12 is likely to change significantly when the heaters 33 are turned on or off. In this regard, in the present embodiment, the heaters 33 are disposed on the bottom plate 30a, and the camera 12 is disposed on the top plate 30b. In other words, the heaters 33 and the camera 12 are disposed on opposite surfaces in the heat-insulating space, specifically on top and bottom surfaces. This can suppress the temperature change around the camera 12. Instead of the heater 33, a cooler for cooling the heat-insulating space may be provided. Alternatively, both the heater 33 and the cooler may be provided. The cooler may be a Peltier cooler, for example.

The temperature sensor 34 detects the temperature in the heat-insulating space. An object of the present embodiment is to keep the temperature around the camera 12 substantially constant, and thus, it is preferable that the temperature sensor 34 is disposed in the vicinity of the camera 12. In the present embodiment, the temperature sensor 34 is disposed at a position lower than an upper end of the camera 12 and higher than a lower end of the camera 12. Specifically, the height of the temperature sensor 34 corresponds to a position of a detection element of the temperature sensor 34. In the present embodiment, the temperature sensor 34 is integrated with the temperature controller 35, but may be separate members from each other. In such a case, the temperature sensor 34 may be attached to the camera 12.

The temperature controller 35 adjusts the output of the heaters 33 based on the current temperature detected by the heater 33. The target temperature is preset for the temperature controller 35, and the temperature controller 35 supplies the electric power to the heaters 33 according to the relationship between the current temperature and the target temperature. For example, in the case where the current temperature is lower than the target temperature, the temperature controller 35 supplies the electric power to the heaters 33. In the case where the current temperature is equal to or greater than the target temperature, the electric power is not supplied to the heaters 33. The magnitude of electric power to be supplied to the heaters 33 may be changed according to the difference between the current temperature and the target temperature. The temperature controller 35 of the present embodiment is disposed within the heat-insulating space, specifically on the side plate. Alternatively, the temperature controller 35 may be disposed outside the heat-insulating space.

In the heat-insulating space, a humidity control material or lighting may be provided, for example.

With the above configuration, even when changes in the outside temperature or other factors cause the changes in the temperature of the environment where the sorting device 1 is placed, the temperature around the camera 12 can be kept at a temperature close to the target temperature. As a result, the focal length of the camera 12 is substantially constant. On the other hand, the focus adjustment of the camera 12 is performed in advance in the environment at the target temperature that has been set for the temperature controller 35. Therefore, the clear image can be stably obtained. The determination can be made using the clear image, which can accurately distinguish the crushed piece and the conveyance surface 10a. Furthermore, an outline of the crushed piece can be accurately identified, and a boundary between the crushed piece and the conveyance surface 10a can be accurately identified. Thus, the area of the crushed piece can be accurately identified. Furthermore, the range where the wrinkles have appeared can be accurately identified. With the above configuration, high accuracy of determination can be achieved for the content rate of the additive metal in each crushed piece.

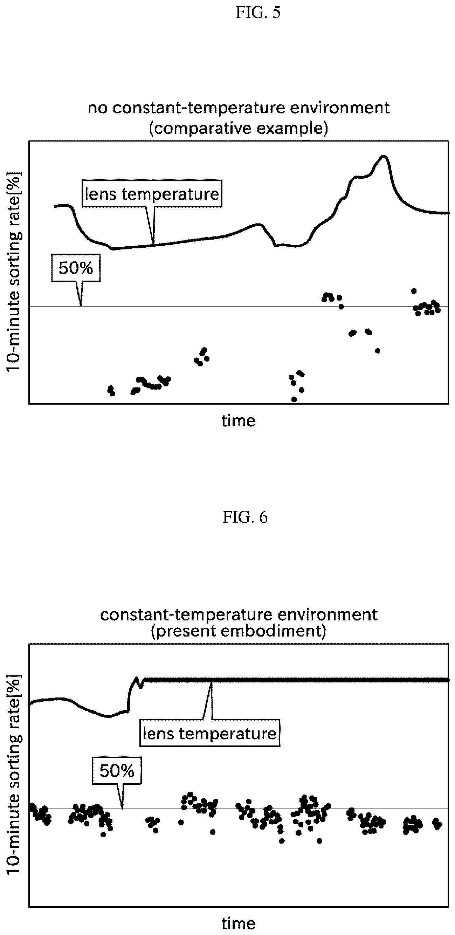

Next, an experiment for verifying an effect of the present embodiment will be described with reference to FIGS. 5 and 6.

In this experiment, crushed pieces were sorted using the sorting device 1 of the present embodiment in which the camera 12 is placed in the constant-temperature environment, and using a sorting device of a comparative example without the constant-temperature environment. The sorting device of the comparative example did not include the heat-insulating cover 30, the heater 33, the temperature sensor 34, and the like. A 10-minute sorting rate was recorded for each time. The 10-minute sorting rate is a percentage of the crushed pieces that have been sorted into the low-content group for 10 minutes. Assuming that types of the crushed pieces to be supplied to the sorting device 1 are similar to each other, the 10-minute sorting rate is unlikely to change significantly.

However, as illustrated in FIG. 5, in the comparative example, the 10-minute sorting rate changed significantly. In particular, during a time period in which the lens temperature was low, the 10-minute sorting rate dropped significantly. In this regard, in the present embodiment, as illustrated in FIG. 6, the 10-minute sorting rate indicated substantially the same value. In the present embodiment, the camera 12 was located in the constant-temperature environment. Thus, the lens temperature was substantially constant at the target temperature. Accordingly, it could be confirmed that by the camera 12 was located in the constant-temperature environment to stabilize the 10-minute sorting rate.

As described above, the identification device 2 of the present embodiment involves the following feature 1. That is, the identification device 2 includes the conveyor 10, the camera 12, and the image processor 14b. The conveyor 10 has the conveyance surface 10a for placing an object, and conveys the object. The camera 12 is placed in the constant-temperature environment, and captures the object conveyed by the conveyor 10. The image processor 14b analyzes the image obtained from the camera 12 capturing the object to identify the object on the conveyance surface 10a.

Accordingly, the camera 12 is placed in the constant-temperature environment so that the focal length of the camera 12 is unlikely to change. This can stably obtain the clear image. As a result, the accuracy of identification of the object can increase.

The identification device 2 of the present embodiment involves the following feature 2. That is, the identification device 2 includes the heat-insulating cover 30 constituted by the heat-insulating material. The heat-insulating space is formed in the heat-insulating cover 30. The camera 12 is placed in the heat-insulating space.

This reduces the influence of the outside temperature on the camera 12.

The identification device 2 of the present embodiment involves the following feature 3. That is, the identification device 2 includes the heaters 33, the temperature sensor 34, and the temperature controller 35. The heaters 33 are placed in the heat-insulating space. The temperature sensor 34 is placed in the heat-insulating space. The temperature controller 35 adjusts the output of the heaters 33 based on the temperature detected by the temperature sensor 34 such that the temperature of the heat-insulating space approaches the target temperature.

As a result, the output of the heaters 33 is adjusted based on the temperature of the heat-insulating space and the target temperature, and thus, the temperature of the heat-insulating space can approach the target temperature with high accuracy.

The identification device 2 of the present embodiment involves the following feature 4. That is, the temperature sensor 34 is disposed at a position lower than the upper end of the camera 12 and higher than the lower end of the camera 12.

As a result, the heights of the temperature sensor 34 and the camera 12 are aligned at the same height, so that the temperature sensor 34 can detect a temperature close to the temperature around the camera 12. Therefore, the temperature around the camera 12 can approach the target temperature.

The identification device 2 of the present embodiment involves the following feature 5. That is, the camera 12 is the line camera. The bottom plate 30a of the heat-insulating cover 30 has the window portion 30c that has an elongated shape and for which the camera 12 captures the object. The heaters 33 are disposed on the widthwise outward sides of the window portion 30c formed in the bottom plate 30a of the heat-insulating cover 30.

This can reduce the size of the heat-insulating cover 30, as compared with a configuration in which the heater 33 is disposed on the longitudinal outward side of the window portion 30c.

The above-mentioned features 1 to 5 can be appropriately combined as long as no contradiction occurs. For example, feature 3 can be combined with at least one of features 1 and 2. Feature 4 can be combined with at least one of features 1 to 3. Feature 5 can be combined with at least one of features 1 to 4.

Although the preferred embodiment of the present application has been described above, the above configuration can be modified, for example, as follows.

There are various ways to achieve the constant-temperature environment for placing the camera 12. The heaters 33, the temperature sensor 34, and the temperature controller 35 can be omitted, in the case where the heat-insulating cover 30 is constituted by a material with high insulating property and heat generation of the camera 12 itself is not a problem, for example. Instead of a configuration in which the heat-insulating cover 30 covers a space from the camera 12 to the conveyor 10, a heat-insulating cover may cover mainly only the camera 12.

The flowchart indicated in the above embodiment is merely an example, and some processes may be omitted, the details of some processes may be changed, or new processes may be added.

The functions of the components disclosed herein can be executed using a circuit or processing circuit, including a general purpose processor, a special purpose processor, an integrated circuit, Application Specific Integrated Circuits (ASIC), a conventional circuit, and/or a combination thereof, configured or programmed to execute the disclosed functions. The processor includes a transistor and other circuits, and is thus considered as a processing circuit or a circuit. In the present disclosure, a circuit, unit, or means is hardware that executes the recited functions or is hardware that is programmed to execute the recited functions. The hardware may be hardware disclosed herein or other known hardware that is programmed or configured to execute the recited functions. In the case where the hardware is a processor considered as a type of circuit, the circuit, means, or unit is a combination of hardware and software, and the software is used to constitute the hardware and/or the processor.

## Claims

1. An identification device comprising:
a conveyor that has a conveyance surface for placing an object, the conveyor conveying the object;
a camera that is placed in a constant-temperature environment and captures the object conveyed by the conveyor; and
an image processor configured to analyze an image obtained from the camera capturing the object to identify the object on the conveyance surface.

2. The identification device according to claim 1, further comprising
a heat-insulating cover that is constituted by a heat-insulating material and has a heat-insulating space inside the heat-insulating cover, wherein
the camera is placed in the heat-insulating space.

3. The identification device according to claim 2, further comprising:
a heater or a cooler that is placed in the heat-insulating space;
a temperature sensor that is placed in the heat-insulating space; and
a temperature controller that adjusts an output of the heater or the cooler based on a temperature detected by the temperature sensor such that a temperature of the heat-insulating space approaches a target temperature.

4. The identification device according to claim 3, wherein
the temperature sensor is disposed at a position lower than an upper end of the camera and higher than a lower end of the camera.

5. The identification device according to claim 3, wherein
the camera is a line camera,
a window portion having an elongated shape is formed on a bottom plate of the heat-insulating cover, the window portion being for capturing the object by the camera, and
the heater or the cooler is disposed on a widthwise outward side of the window portion formed in the bottom plate of the heat-insulating cover.

6. A sorting device comprising:
the identification device according to claim 1; and
a sorting portion that sorts the object, wherein
the image processor analyzes the image to perform determination for the object, and
the sorting portion sorts the object based on a determination result of the image processor.

7. An identification method comprising:
operating a conveyor in a state where an object is placed on a conveyance surface of the conveyor to convey the object;
capturing the object conveyed by the conveyor with the use of a camera that is placed in a constant-temperature environment; and
analyzing an image obtained from the camera capturing the object to identify the object on the conveyance surface.
